# EUROPÄISCHE PATENTSCHRIFT

(11) **EP 1 597 593 B1**
(45) Veröffentlichungstag und Bekanntmachung des Hinweises auf die Patenterteilung: **04.08.2010**
(21) Anmeldenummer: 04706168.4
(22) Anmeldetag: 29.01.2004
(51) Int. Cl.: G01P 13/04

(54) **VERFAHREN UND VORRICHTUNG ZUR STEUERUNG EINES KFZ-ANTRIEBSSTRANGS**
METHOD AND DEVICE FOR CONTROLLING A MOTOR VEHICLE DRIVE TRAIN
PROCEDE ET DISPOSITIF PERMETTANT DE COMMANDER L'ENSEMBLE TRANSMISSION D'UN VEHICULE AUTOMOBILE

(30) Priorität: 25.02.2003 DE 10308218
(43) Veröffentlichungstag der Anmeldung: 23.11.2005
(73) Patentinhaber: Volkswagen AG, 38436 Wolfsburg (DE); Conti Temic microelectronic GmbH, 90411 Nürnberg (DE)
(72) Erfinder: GÄRTNER, Volker, 75449 Wurmberg (DE); TONN, Armin, 91154 Roth (DE); BECHER, Alwin, 90513 Zirndorf (DE); LEIPNITZ, Klaus, 90542 Eckental (DE); BOTHE, Edgar, 31224 Peine (DE)
(74) Vertreter: Schneider, Peter Christian
(86) Internationale Anmeldenummer: PCT/EP2004/000782
(87) Internationale Veröffentlichungsnummer: WO 2004/077069

(56) Entgegenhaltungen:
- DE-A- 3 742 357
- DE-A- 19 919 836
- FR-A- 2 502 788
- US-A- 3 728 676
- US-A- 4 586 401

## Beschreibung

Die Erfindung betrifft ein Verfahren zur Steuerung eines Kfz-Antriebsstrangs, bei dem die Drehrichtung des Antriebsstrangs durch eine Auswertung erster Sensorsignale einer abtriebsseitig eines Untersetzungsgetriebes angeordneten, ersten Sensoreinheit ermittelt wird, die ein an einem rotierbaren Bauteil des abtriebsseitigen Antriebsstrangs befestigtes, erstes Sensorrad und zwei umfangsseitig benachbart wirkbeabstandet von dem Sensorrad gehäusefest angeordnete und über Signalleitungen mit einer Auswertungseinheit in Verbindung stehende, erste Drehzahlsensoren umfasst, mit der die Drehrichtung des Antriebsstrangs anhand gleichsinniger Flankenwechsel der ersten Sensorsignale ermittelt wird, und bei dem abhängig von der ermittelten Drehrichtung des Antriebsstrangs eine Sicherheits- und Komfortfunktion aktiviert bzw. deaktiviert wird, wobei zwischen den Dreh- bzw. Fahrzuständen Rechtsdrehung des Antriebsstrangs entsprechend einer Vorwärtsbewegung des Kraftfahrzeuges, Linksdrehung des Antriebsstrangs entsprechend einer Rückwärtsbewegung des Kraftfahrzeuges, und unerkannte Drehrichtung des Antriebsstrangs entsprechend einem Fahrzeugstillstand bzw. einer unerkannten Fahrzeugbewegung unterschieden wird.

Die Erfindung betrifft des weiteren eine Vorrichtung zur Steuerung eines Kfz-Antriebsstrangs, mit einer abtriebsseitig eines Untersetzungsgetriebes angeordneten, ersten Sensoreinheit zur Ermittlung der Drehrichtung des Antriebsstrangs, die ein an einem rotierbaren Bauteil des abtriebsseitigen Antriebsstrangs befestigtes erstes Sensorrad und zwei umfangsseitig benachbart wirkbeabstandet von dem ersten Sensorrad gehäusefest angeordnete und über Signalleitungen mit einer Auswertungseinheit in Verbindung stehende erste Drehzahlsensoren umfasst, mittels der die Drehrichtung des Antriebsstrangs anhand gleichsinniger Flankenwechsel zugeordneter ersten Sensorsignale ermittelbar ist,

Sensoreinheiten zur Ermittlung der Drehzahl eines rotierbaren Bauteils sind seit längerem bekannt. Beispielsweise werden derartige Sensoreinheiten in einem automatisierten Kfz-Getriebe jeweils einer Getriebewelle zugeordnet und zur Schaltsteuerung oder Übersetzungssteuerung einer Getriebesteuerung verwendet, oder in einem Kraftfahrzeug jeweils einer Radnabe zugeordnet und zur Bremssteuerung einer Antiblockier- oder Antriebsschlupfregelung verwendet. Es handelt sich dabei zumeist um magnetoelektrische oder induktiv-elektrische Drehzahlsensoren, die jeweils im Wirkbereich eines zugeordneten und an einem rotierbaren Bauteil befestigten Sensorrades angeordnet sind und bei einer Drehung des Sensorrades ein Impuls- oder Rechecksignal erzeugen, das über eine Signalleitung in eine Auswertungseinheit übertragen und dort zu einer Drehzahlinformation ausgewertet wird. Das Sensorrad ist zumeist als Zahnscheibe mit einer Stirnverzahnung ausgebildet, an dem der zugeordnete Drehzahlsensor im Wirkbereich der Stirnverzahnung im wesentlichen radial ausgerichtet gehäusefest angeordnet ist.

Über eine derartige Sensoreinheit kann jedoch nur der Betrag der Drehzahl des betreffenden Bauteils ermittelt werden, nicht die Drehrichtung des Bauteils. Dies ist jedoch, wie beispielsweise aus der DE 30 41 041 A1 bekannt ist, auf relativ einfache Weise dadurch möglich, dass im Wirkbereich eines Sensorrades zwei Drehzahlsensoren umfangsseitig benachbart angeordnet werden, wobei dann die zeitliche Abfolge der Impulse bzw. der gleichsinnigen, d.h. in der gleichen Reihenfolge ablaufenden Flankenwechsel der betreffenden Sensorsignale zur Ermittlung der Drehrichtung des betreffenden Bauteils ausgewertet werden kann.

Vorliegend ist vorgesehen, die Drehrichtung eines Kfz-Antriebsstrangs zu ermitteln, um abhängig von der ermittelten Drehrichtung des Antriebsstrangs eine Sicherheits- und Komfortfunktion zu aktivieren oder zu deaktivieren. Bei einem Antriebsstrang, der Getriebeeinheiten mit Zahnflankenspiel, wie ein Zahnradpaar des eingelegten Ganges eines Schaltgetriebes und ein Differenzialgetriebe, und elastische Bauteile, wie ein Schwingungsdämpfer einer Motorkupplung und einer Hardyscheibe, aufweist, handelt es sich prinzipiell um ein schwingungsfähiges System. Es kommt somit im Betrieb zu Drehschwingungen und zur Überbrückung von Zahnflankenspiel, was zu lokalen Drehrichtungswechseln führen kann. Um dennoch eine eindeutige Bestimmung der Drehrichtung des Antriebsstrangs durchführen zu können, müssen nach dem Stand der Technik bei der Auswertung der Sensorsignale in der Auswertungseinheit mehrere gleichsinnige Flankenwechsel abgewartet werden, was nachteilig zu einer zeitlichen Verzögerung der Drehrichtungsbestimmung führt und dadurch aufgrund einer Verzögerung der Aktivierung und Deaktivierung von Sicherheits- und Komfortfunktionen zumindest Komforteinbußen zur Folge haben kann.

Aus der DE 37 42 357 A1 ist ein Verfahren zur Drehwinkelbestimmung eines Drehkörpers bekannt. Der Drehkörper ist dabei drehfest mit einer Kodiereinheit verbunden, die synchron mit der Drehkörperdrehung Sensorsignale in Form dreier jeweils symmetrischer Rechtecksignale erzeugt, die zueinander um jeweils 120° phasenverschoben sind. Jede Flanke jedes Sensorsignals erzeugt einen Steuerimpuls für nachgeschaltete Einheiten. Zugleich führt aufgrund der festen Phasenbeziehung jede Flanke jedes Sensorsignals zu einer Änderung des aktuellen Pegelmusters der Sensorsignale. Zur Überprüfung der Gültigkeit eines von einer nachgeschalteten Einheit empfangenen Steuerimpulses wird jeweils das aktuelle Pegelmuster mit demjenigen Pegelmuster verglichen, das zum Zeitpunkt des unmittelbar vorangegangenen Steuerimpulses aktuell war. Im Fall, dass eine Musterindentität vorliegt, kann dann geschlossen werden, dass der aktuell empfangene Steuerimpuls kein wahrer Steuerimpuls sondern ein Störimpuls ist, da ein wahrer Steuerimpuls eine Änderung des Pegelmusters zu Folge hätte.

Zur Bestimmung der Drehrichtung des Drehkörpers ist die Auswertung zweier phasenversetzter Sensorsignale, deren Abfolge gleichgerichteter Flankenwechsel bestimmbar ist, grundsätzlich ausreichend. Die Verwendung eines dritten, weiter phasenversetzten Signals, das ebenfalls auf einen zu den übrigen Signalen gleichgerichteten Flankenwechsel hin überprüft wird, kann in drehschwingungsbehafteten Systemen zu einer Verbesserung der Zuverlässigkeit und zu einer Beschleunigung der Drehrichtungsbestimmung führen. Es müssen jedoch mindestens drei gleichgerichtete Flankenwechsel abgewartet werden, um eine validierte Drehrichtungsbestimmung vornehmen zu können und insbesondere eine nur lokale, schwingungsbedingte Drehrichtungsumkehr auszuschließen.

Die DE 199 19 836 A1 offenbart ein System zur Fahrtrichtungserkennung eines Kraftfahrzeugs, das auf dem Vergleich der Drehzahlen von Eingangs- und Ausgangswelle eines Untersetzungsgetriebes basiert. Hierzu wird zunächst das Verhältnis der eingangs- und ausgangsseitigen Drehzahlen bestimmt. Auf die jeweilige Fahrtrichtung kann dann unter Ausnutzung von Zusatzinformation betreffend die Übersetzungsverhältnisse in dem Getriebe geschlossen werden. So ist es insbesondere üblich, dass ein Rückwärtsgang mit einer stärkeren Untersetzung realisiert wird als jeder Vorwärtsgang, sodass bei Rückwärtsfahrt ein Drehzahlverhältnis gemessen wird, das in keinem Vorwärtsgang realisiert sein kann. Auf diese Weise kann auf die aktuelle Fahrtrichtung geschlossen werden. Dieses bekannte System versagt jedoch gerade im Bereich sehr kleiner Fahrtgeschwindigkeiten, z.B. bei einem Anfahren am Berg, und bietet zudem keine Möglichkeit, Störungen durch die oben erwähnten Drehschwingungen des Antriebsstrangs zu erkennen oder eine gültige Drehrichtungsbestimmung von derartigen Störungen zu unterscheiden.

Es ist daher das Problem der vorliegenden Erfindung, ein Verfahren zur Steuerung eines Kfz-Antriebsstrangs anzugeben, mit dem die Ermittlung der Drehrichtung des Antriebsstrangs weiter beschleunigt werden kann. Des Weiteren soll eine entsprechende Vorrichtung vorgeschlagen werden.

Das Problem das Verfahren betreffend wird erfindungsgemäß in Verbindung mit dem Oberbegriff des Anspruchs 1 dadurch gelöst, dass zur Beschleunigung der Drehrichtungsermittlung ein zweites Sensorsignal einer antriebsseitig des Untersetzungsgetriebes angeordneten zusätzlichen zweiten Sensoreinheit ausgewertet wird, die ein an einem rotierbaren Bauteil des antriebsseitigen Antriebsstrangs befestigtes, zweites Sensorrad und einen wirkbeabstandet von dem zweiten Sensorrad gehäusefest angeordneten und über eine Signalleitung mit der Auswertungseinheit in Verbindung stehenden, zweiten Drehzahlsensor umfasst, wobei eine von der ersten Sensoreinheit ermittelte Drehrichtung des Antriebsstrangs in der Auswerteeinheit durch eine Plausibilitätsprüfung anhand einer von der zweiten Sensoreinheit ermittelten Drehung des Antriebsstrangs auf ihre Gültigkeit hin überprüft wird, sodass bei geschlossener Wirkverbindung des antriebsseitigen Antriebsstrangs mit dem abtriebsseitigen Antriebsstrang die Drehrichtung des Antriebsstrangs bei einer über die zweite Sensoreinheit ermittelten Drehung des Antriebsstrangs nach einem einzigen ermittelten gleichsinnigen Flankenwechsel der beiden ersten Drehzahlsensoren der ersten Sensoreinheit bestimmt wird.

Durch die zusätzliche zweite Sensoreinheit, die bei einem automatisierten Getriebe vorteilhaft eine an dem antriebsseitigen Antriebsstrang ohnehin vorhandene Sensoreinheit einer Getriebesteuerung sein kann, wird die dortige Drehzahl des Antriebsstrangs aufgrund des wirksamen Übersetzungsverhältnisses mit höherer Auflösung bzw. höherer Empfindlichkeit erfasst. Somit kann eine mittels der ersten Sensoreinheit ermittelte Drehrichtung des Antriebsstrangs durch eine in der gemeinsamen Auswertungseinheit durchgeführte Plausibilitätsprüfung mit dem Sensorsignal der zweiten Sensoreinheit überprüft und somit schneller als gültig erkannt werden.

Demzufolge kann bei geschlossener Wirkverbindung des antriebsseitigen Antriebsstrangs mit dem abtriebsseitigen Antriebsstrang die Drehrichtung des Antriebsstrangs bei einer über die zweite Sensoreinheit ermittelten Drehung des Antriebsstrangs schon nach einem einzigen ermittelten gleichsinnigen Flankenwechsel beider Drehzahlsensoren der ersten Sensoreinheit bestimmt werden.

Dagegen sollte bei getrennter Wirkverbindung des antriebsseitigen Antriebsstrangs mit dem abtriebsseitigen Antriebsstrang, die bei eingestelltem Leerlauf, d.h. bei eingelegter Fahrstufe N bei einem Getriebeautomaten und bei keinem eingelegten Gang bei einem Stufenwechselgetriebe, gegeben ist, die Drehrichtung des Antriebsstrangs erst nach mindestens zwei ermittelten gleichsinnigen Flankenwechseln beider Drehzahlsensoren der ersten Sensoreinheit bestimmt werden, da in diesem Fall kein Wirkzusammenhang zwischen der ersten Sensoreinheit und der zweiten Sensoreinheit besteht.

Bei Unterschreitung einer vorab festgelegten Mindestdrehzahl durch die über eine der beiden Sensoreinheiten ermittelten Drehzahl wird die Drehrichtung des Antriebsstrangs zweckmäßig auf unerkannt gesetzt, damit ggf. aktivierte Sicherheits- und Komfortfunktionen rechtzeitig vor einem Fahrzeugstillstand und einem eventuellen Fahrtrichtungswechsel deaktiviert werden können. Es versteht sich von selbst, dass bei der Ermittlung der Drehzahl bei getrennter Wirkverbindung des antriebsseitigen Antriebsstrangs mit dem abtriebsseitigen Antriebsstrang nur die Sensorsignale der ersten Sensoreinheit ausgewertet werden.

Als Anwendungsbeispiel einer Sicherheits- und Komfortfunktion kann eine Hillholderfunktion genannt werden, die bei einem Anfahrvorgang zweckmäßig bei einer erkannten Fahrzeugbewegung in die falsche Richtung aktiviert und nach einer Aktivierung bei einer unerkannten Fahrzeugbewegung wieder deaktiviert wird. Dabei ist unter einer Fahrzeugbewegung in die falsche Richtung bei einem Anfahrvorgang mit einem Vorwärtsgang ein Zurückrollen des Kraftfahrzeuges und bei einem Anfahrvorgang mit einem Rückwärtsgang ein Vorwärts rollen des Kraftfahrzeuges zu verstehen.

Das Problem die Vorrichtung betreffend wird erfindungsgemäß in Verbindung mit dem Oberbegriff des Anspruchs 6 dadurch gelöst, dass zur Beschleunigung der Drehrichtungsermittlung antriebsseitig des Untersetzungsgetriebes eine zusätzliche zweite Sensoreinheit vorgesehen ist, die ein an einem rotierbaren Bauteil des antriebsseitigen Antriebsstrangs befestigtes, zweites Sensorrad und einen wirkbeabstandet von dem zweiten Sensorrad gehäusefest angeordneten und über eine Signalleitung mit der Auswertungseinheit in Verbindung stehenden, zweiten Drehzahlsensor umfasst, wobei die Auswerteeinheit eingerichtet ist, eine von der ersten Sensoreinheit ermittelte Drehrichtung des Antriebsstrangs in der Auswerteeinheit durch eine Plausibilitätsprüfung anhand einer von der zweiten Sensoreinheit ermittelten Drehung des Antriebsstrangs auf ihre Gültigkeit hin zu überprüfen.

Es handelt sich dabei um eine relativ einfache und kostengünstige Lösung, insbesondere dann, wenn bei einem automatisierten Getriebe eine an dem antriebsseitigen Antriebsstrang ohnehin vorhandene Sensoreinheit einer Getriebesteuerung als zweite Sensoreinheit verwendet wird.

Um die Sensoreinheiten, auch im Hinblick auf möglichst kurze Signalleitungen, eng beieinander und platzsparend zu positionieren, ist die erste Sensoreinheit vorteilhaft an einer Ausgangswelle des Getriebes und die zweite Sensoreinheit zweckmäßig an einer Eingangswelle des Getriebes angeordnet.

Weitere Einzelheiten der Erfindung ergeben sich aus der nachfolgenden ausführlichen Beschreibung und den beigefügten Zeichnungen, die beispielhaft zur Erläuterung des erfindungsgemäßen Steuerungsverfahrens und der erfindungsgemäßen Steuerungsvorrichtung dienen.

Hierzu zeigen:
- Fig. 1: Einen schematischen Aufbau der erfindungsgemäßen Steuerungsvorrichtung, und
- Fig. 2: den zeitlichen Verlauf der Sensorsignale von Drehzahlsensoren der Steuerungsvorrichtung nach Fig. 1.

Ein Antriebsstrang 1 eines Kraftfahrzeuges weist ein Getriebe 2 auf, das über eine Triebwelle 3 permanent mit einer Antriebsachse 4 in Verbindung steht. Eine Eingangswelle W1 des Getriebes 2, in die bei geschlossener Motorkupplung ein von einem Antriebsmotor erzeugtes Drehmoment und eine Drehbewegung eingeleitet wird, steht über ein trennbares Untersetzungsgetriebe 5 mit einer Ausgangswelle W2 in Verbindung. Das Untersetzungsgetriebe 5 wird bei einem Stufenwechsetgetriebe, das vorliegend als Getriebe 2 vorausgesetzt wird, durch die Gangzahnräder desjenigen Ganges von mehreren vorhandenen Gängen gebildet, der gerade eingelegt ist. Bei dem Untersetzungsgetriebe 5 kann es sich aber auch um die Gangzahnräder der gerade aktiven Übersetzungsstufe eines Getriebeautomaten oder um den variator eines CVT-Getriebes handeln. Die Ausgangswelle W2 des Getriebes 2 steht huber ein Umlenkgetriebe 6 und die Triebwelle 3 permanent mit dem Differenzialgetriebe 7 der Antriebsachse 4 in Verbindung. Das in der Triebwelle 3 wirksame Drehmoment und die entsprechende Drehbewegung wird, entsprechend dem wirksamen Übersetzungsverhältnis des Differenzialgetriebes 7 gewandelt, jeweils über eine Halbwelle 8 in die Antriebsräder 9 der Antriebsachse 4 übertragen.

Es besteht somit eine feste Beziehung zwischen der Drehzahl n₂, der Drehrichtung 10, und dem Drehmoment der Ausgangswelle W2 des Getriebes 2 und den entsprechenden Größen an den Antriebsrädern 9 der Antriebsachse 4. Insbesondere besteht somit eine feste Beziehung zwischen der Drehrichtung 10 der Ausgangswelle W2 und der Bewegungs- bzw. Fahrtrichtung 11 des Kraftfahrzeuges. Zur Ermittlung der Bewegungsrichtung 11 des Kraftfahrzeuges ist eine erste Sensoreinheit 12 vorgesehen, die ein an der Ausgangswelle W2 starr und somit mitrotierbar befestigtes Sensorrad 13 und zwei umfangsseitig benachbart wirkbeabstandet von dem Sensorrad 13 gehäusefest angeordnete und über Signalleitungen 14 mit einer Auswertungseinheit 15 in Verbindung stehende Drehzahlsensoren S1, S2 umfasst. Erfindungsgemäß ist eine zusätzliche zweite Sensoreinheit 16 vorgesehen, die ein an der Eingangswelle W1 starr und somit mitrotierbar befestigtes Sensorrad 17 und einen wirkbeabstandet von dem Sensorrad 17 gehäusefest angeordneten und über eine Signalleitung 18 mit der Auswertungseinheit 15 in Verbindung stehenden Drehzahlsensor S3 umfasst.

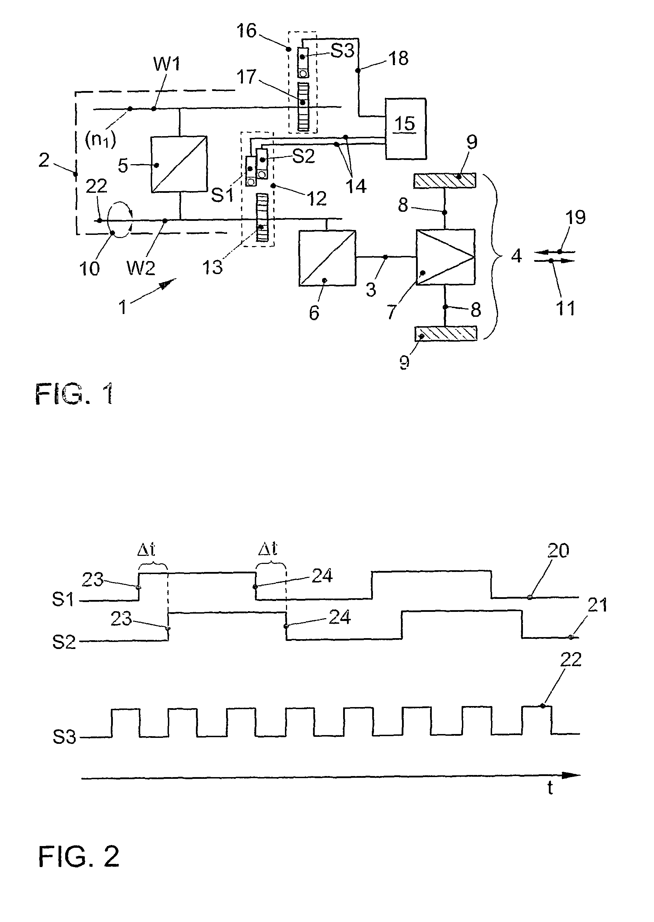

Bei einer Vorwärtsfahrt 19 des Kraftfahrzeuges ergeben sich die in Fig. 2 veranschaulichten Verläufe der Sensorsignale 20, 21, 22 der Drehzahlsensoren S1, S2, S3 über der Zeit t. Bedingt durch die Konturierung des Sensorrades 13 ergeben sich abwechselnd steigende und fallende Flankenwechsel 23, 24 dergestalt, dass der jeweilige Flankenwechsel 23, 24 zuerst an dem ersten Sensor S1 und mit einer gewissen zeitlichen Verzögerung Δt an dem zweiten Sensor S2 der ersten Sensoreinheit 12 erzeugt wird. Die Reihenfolge der Flankenwechsel 23, 24 wird in an sich bekannter Weise in der Auswertungseinheit 15 zur Bestimmung der Drehrichtung 10 der Ausgangswelle W2 des Getriebes 2 und damit der Bewegungsrichtung 11 des Kraftfahrzeuges ausgewertet. Hierzu müssen nach dem Stand der Technik aber wegen möglicher Drehschwingungen und der Überbrückung von Zahnflankenspiel in dem Antriebsstrang 1 mehrere gleichsinnige, d.h. in der gleichen Reihenfolge ablaufende Flankenwechsel 23, 24 abgewartet werden, bevor die Bewegungsrichtung 11 des Kraftfahrzeuges eindeutig bestimmt werden kann. Zur Beschleunigung der Drehrichtungsermittlung der Ausgangswette W2 ist daher erfindungsgemäß vorgesehen, dass bei eingelegtem Gang, d.h. bei geschlossenem Untersetzungsgetriebe 5 und damit gegebener fester Beziehung zwischen der Drehbewegung bzw. der Drehzahl n₁ der Eingangswelle W1 und der Drehbewegung bzw. der Drehzahl n₂ der Ausgangswelle W2, zusätzlich das Sensorsignal 22 des Sensors S3 der zweiten Sensoreinheit 16 ausgewertet wird. Aufgrund des durch das Untersetzungsgetriebe 5 gegebenen wirksamen Übersetzungsverhältnisses n₁ : n₂ > 1 zwischen der Eingangswelle W1 und der Ausgangswelle W2 weist die zweite Sensoreinheit 16 bei weitgehend gleicher Bauart der Sensorräder 13, 17 eine höhere zeitliche Auflösung auf, so dass eine Drehbewegung schneller erkannt und die Drehrichtung 10 der Ausgangswelle W2 in Verbindung mit den Sensorsignalen 20, 21 der Sensoren S1, S2 der ersten Sensoreinheit 12 schon nach einem Flankenwechsel 23, 24 sicher und somit schneller bestimmt werden kann.

Bei einem automatisierten Schaltgetriebe ist ohnehin jede Getriebewelle mit einer Sensoreinheit zur Ermittlung der Wellendrehzahl als Bestandteil einer Getriebesteuerung ausgestattet, so dass in diesem Fall zweckmäßig die der Eingangswelle W1 zugeordnete Sensoreinheit der Getriebesteuerung zusätzlich als zweite Sensoreinheit 16 der vorliegenden Antriebsstrangsteuerung verwendet wird. Nach erkannter Bewegungs- bzw. Fahrtrichtung des Kraftfahrzeuges kann eine Sicherheits- und Komfortfunktion, wie beispielsweise eine Hillholderfunktion, aktiviert oder deaktiviert werden. Durch die erfindungsgemäße Vorrichtung und das entsprechende Verfahren wird auf relativ einfache und kostengünstige Weise eine deutliche Verbesserung der Antriebsstrangsteuerung erreicht.

### Bezugszeichenliste

- 1: Antriebsstrang
- 2: Getriebe
- 3: Triebwelle
- 4: Antriebsachse
- 5: Untersetzungsgetriebe
- 6: Umlenkgetriebe
- 7: Dififerenzialgetriebe
- 8: Halbwelle
- 9: Antriebsrad
- 10: Drehrichtung
- 11: Bewegungsrichtung, Fahrtrichtung
- 12: (erste) Sensoreinheit
- 13: Sensorrad
- 14: Signalleitung
- 15: Auswertungseinheit
- 16: (zweite) Sensoreinheit
- 17: Sensorrad
- 13: Signalleitung
- 19: Vorwärtsfahrt, Vorwärtsbewegung
- 20: Sensorsignal (von S1)
- 21: Sensorsignal (von S2)
- 22: Sensorsignal (von S3)
- 23: (steigender) Flankenwechsel
- 24: (fallender) Flankenwechsel
- n₁: Drehzahl (von W1)
- n₂: Drehzahl (von W2)
- S1: (erster) Drehzahlsensor
- S2: (zweiter) Drehzahlsensor
- S3: Drehzahlsensor
- t: Zeit
- Δt: zeitliche Verzögerung
- W1: Eingangswelle
- W2: Ausgangswelle

## Patentansprüche

1. Verfahren zur Steuerung eines Kfz-Antriebsstrangs, bei dem die Drehrichtung (10) des Antriebsstrangs durch eine Auswertung erster Sensorsignale (20, 21) einer abtriebsseitig eines Untersetzungsgetriebes (5) angeordneten, ersten Sensoreinheit (12) ermittelt wird, die ein an einem rotierbaren Bauteil des abtriebsseitigen Antriebsstrangs befestigtes, erstes Sensorrad (13) und zwei umfangsseitig benachbart wirkbeabstandet von dem Sensorrad (13) gehäusefest angeordnete und über Signalleitungen (14) mit einer Auswertungseinheit (15) in Verbindung stehende, erste Drehzahlsensoren (S1, S2) umfasst, mit der die Drehrichtung (10) des Antriebsstrangs anhand gleichsinniger Flankenwechsel (23, 24) der ersten Sensorsignale (20, 21) ermittelt wird, und bei dem abhängig von der ermittelten Drehrichtung (10) des Antriebsstrangs eine Sicherheits- und Komfortfunktion aktiviert bzw. deaktiviert wird, wobei zwischen den Dreh- bzw. Fahrzuständen Rechtsdrehung des Antriebsstrangs entsprechend einer Vorwärtsbewegung des Kraftfahrzeuges, Linksdrehung des Antriebs strangs entsprechend einer Rückwärtsbewegung des Kraftfahrzeuges, und unerkannte Drehrichtung des Antriebsstrangs entsprechend einem Fahrzeugstillstand bzw. einer unerkannten Fahrzeugbewegung unterschieden wird,
**dadurch gekennzeichnet,**
**dass** zur Beschleunigung der Drehrichtungsermittlung ein zweites Sensorsignal (22) einer antriebsseitig des Untersetzungsgetriebes (5) angeordneten zusätzlichen zweiten Sensoreinheit (16) ausgewertet wird, die ein an einem rotierbaren Bauteil des antriebsseitigen Antriebsstrangs befestigtes, zweites Sensorrad (17) und einen wirkbeabstandet von dem zweiten Sensorrad (17) gehäusefest angeordneten und über eine Signalleitung (18) mit der Auswertungseinheit (15) in Verbindung stehenden, zweiten Drehzahlsensor (S3) umfasst,
wobei eine von der ersten Sensoreinheit (12) ermittelte Drehrichtung (10) des Antriebsstrangs in der Auswerteinheit (15) durch eine Plausibilitätsprüfung anhand einer von der zweiten Sensoreinheit (16) ermittelten Drehung des Antriebsstrangs auf ihre Gültigkeit hin überprüft wird, sodass bei geschlossener Wirkverbindung des antriebsseitigen Antriebsstrangs mit dem abtriebsseitigen Antriebsstrang die Drehrichtung (10) des Antriebsstrangs bei einer über die zweite Sensoreinheit (16) ermittelten Drehung des Antriebsstrangs nach einem einzigen ermittelten gleichsinnigen Flankenwechsel (23, 24) der beiden ersten Drehzahlsensoren (S1, S2) der ersten Sensoreinheit (12) bestimmt wird.

2. Verfahren nach Anspruch 1, **dadurch gekennzeichnet, dass** bei getrennter Wirkverbindung des antriebsseitigen Antriebsstrangs mit dem abtriebsseitigen Antriebsstrang die Drehrichtung (10) des Antriebsstrangs nach mindestens zwei ermittelten gleichsinnigen Flarikenwechseln (23, 24) der beiden ersten Drehzahlsensoren (S1, S2) der ersten Sensoreinheit (12) bestimmt wird.

3. Verfahren nach einem der Ansprüche 1 bis 2, **dadurch gekennzeichnet, dass** bei Unterschreitung einer vorab festgelegten Mindestdrehzahl durch die über eine der beiden Sensoreinheiten (12, 16) ermittelte Drehzahl n₂, n₁ die Drehrichtung (10) des Antriebsstrangs auf unerkannt gesetzt wird.

4. Verfahren nach einem der Ansprüche 1 bis 2, **dadurch gekennzeichnet, dass** bei einem Anfahrvorgang bei einer erkannten Fahrzeugbewegung in die falsche Richtung eine Hillholderfunktion aktiviert wird.

5. Verfahren nach Anspruch 3, **dadurch gekennzeichnet, dass** bei einem Anfahrvorgang mit aktivierter Hillholderfunktion bei einer unerkannten Fahrzeugbewegung die Hillholderfunktion deaktiviert wird.

6. Vorrichtung zur Steuerung eines Kfz-Antriebsstrangs, mit einer abtriebsseitig eines Untersetzungsgetriebes (5) angeordneten, ersten Sensoreinheit (12) zur Ermittlung der Drehrichtung (10) des Antriebsstrangs, die ein an einem rotierbaren Bauteil des abtriebsseitigen Antriebsstrangs befestigtes erstes Sensorrad (13) und zwei umfangsseitig benachbart wirkbeabstandet von dem ersten Sensorrad (13) gehäusefest angeordnete und über Signalleitungen (14) mit einer Auswertungseinheit (15) in Verbindung stehende erste Drehzahlsensoren (S1, S2) umfasst, mittels der die Drehrichtung (10) des Antriebsstrangs anhand gleichsinniger Flankenwechsel (23, 24) zugeordneter ersten Sensorsignale (21, 22) ermittelbar ist,
**dadurch gekennzeichnet,**
**dass** zur Beschleunigung der Drehrichtungsermittlung antriebsseitig des Untersetzungsgetriebes (5) eine zusätzliche zweite Sensoreinheit (16) vorgesehen ist, die ein an einem rotierbaren Bauteil des antriebsseitigen Antriebsstrangs befestigtes, zweites Sensorrad (17) und einen wirkbeabstandet von dem zweiten Sensorrad (17) gehäusefest angeordneten und über eine Signalleitung (18) mit der Auswertungseinheit (15) in Verbindung stehenden, zweiten Drehzahlsensor (S3) umfasst,
wobei die Auswerteeinheit eingerichtet ist, eine von der ersten Sensoreinheit (12) ermittelte Drehrichtung (10) des Antriebsstrangs in der Auswerteeinheit (15) durch eine Plausibilitätsprüfung anhand einer von der zweiten Sensoreinheit (16) ermittelten Drehung des Antriebsstrangs auf ihre Gültigkeit hin zu überprüfen, sodass bei geschlossener Wirkverbindung des antriebsseitigen Antriebsstrangs mit dem abtriebsseitigen Antriebsstrang die Drehrichtung (10) des Antriebsstrangs bei einer über die zweite Sensoreinheit (16) ermittelten Drehung des Antriebsstrangs nach einem einzigen ermittelten gleichsinnigen Flankenwechsel (23, 24) der beiden ersten Drehzahlsensoren (S1, S2) der ersten Sensoreinheit (12) bestimmt wird.

7. Vorrichtung nach Anspruch 6, **dadurch gekennzeichnet, dass** bei einem automatisierten Getriebe (2) eine an dem antriebsseitigen Antriebsstrang (1) vorhandene Sensoreinheit einer Getriebesteuerung als zweite Sensoreinheit (16) Verwendung findet.

8. Vorrichtung nach einem der Ansprüche 6 bis 7, **dadurch gekennzeichnet, dass** die erste Sensoreinheit (12) an einer Ausgangswelle W2 des Getriebes (2) angeordnet ist.

9. Vorrichtung nach einem der Ansprüche 6 bis 8, **dadurch gekennzeichnet, dass** die zweite Sensoreinheit (16) an einer Eingangswelle W1 des Getriebes (2) angeordnet ist.

## Claims

1. Method for controlling a motor vehicle drive train, in which the direction of rotation (10) of the drive train is determined by means of an evaluation of first sensor signals (20, 21) from a first sensor unit (12) which is arranged on the output side of a reduction gear (5) and which comprises a first sensor wheel (13) fastened to a rotatable component of the output-side drive train and two rotational speed sensors (S1, S2) which are arranged so as to be circumferentially adjacent to one another, fixedly with respect to the housing, at an effective distance from the sensor wheel (13) and are connected to an evaluation unit (15) via signal lines (14) and by means of which the direction of rotation (10) of the drive train is determined from codirectional edge changes (23, 24) of the first sensor signals (20, 21), and in which method a safety and comfort function is activated and deactivated as a function of the determined direction of rotation (10) of the drive train, a distinction being made between the rotational or driving states of clockwise rotation of the drive train according to a forward movement of the motor vehicle, counterclockwise rotation of the drive train according to a reverse movement of the motor vehicle and undetected direction of rotation of the drive train according to a vehicle standstill or to an undetected vehicle movement, **characterized in that**, to accelerate the determination of the direction of rotation, the sensor signal (22) from an additional second sensor unit (16) arranged on the drive side of the reduction gear (5) is evaluated, said additional second sensor unit comprising a second sensor wheel (17) fastened to a rotatable component of the drive-side drive train and a second rotational speed sensor (S3) which is arranged fixedly with respect to the housing at an effective distance from the sensor wheel (17) and which is connected to the evaluation unit (15) via a signal line (18) a direction of rotation (10), determined by the first sensor unit (12), of the drive train being checked for validity in the evaluation unit (15) by a plausibility check on the basis of a drive train rotation determined by the second sensor unit (16), so that, with the operative connection of the drive-side drive train to the output-side drive train being closed, in the case of a rotation of the drive train which is determined via the second sensor unit (16) the direction of rotation (10) of the drive train is determined after a single determined codirectional edge change (23, 24) of the two first rotational speed sensors (S1, S2) of the first sensor unit (12).

2. Method as claimed in Claim 1, **characterized in that**, with a separated operative connection of the drive-side drive train to the output-side drive train, the direction of rotation (10) of the drive train is determined after at least two determined codirectional edge changes (23, 24) of the two first rotational speed sensors (S1, S2) of the first sensor unit (12).

3. Method as claimed in one of Claims 1 to 2, **characterized in that**, when a predetermined minimum rotational speed is undershot by the rotational speed n₂, n₁ determined via one of the two sensor units (12, 16), the direction of rotation (10) of the drive train is set at undetected.

4. Method as claimed in one of Claims 1 to 2, **characterized in that**, in the case of a starting operation with a detected vehicle movement in the wrong direction, a hill holder function is activated.

5. Method as claimed in Claim 3, **characterized in that**, in the case of a starting operation having an activated hill holder function with an undetected vehicle movement, the hill holder function is deactivated.

6. Device for controlling a motor vehicle drive train, with a first sensor unit (12) arranged on the output side of a reduction gear (5) for determining the direction of rotation (10) of the drive train, said first sensor unit comprising a first sensor wheel (13) fastened to a rotatable component of the output-side drive train and two rotational speed sensors (S1, S2) which are arranged so as to be circumferentially adjacent to one another, fixedly with respect to the housing, at an effective distance from the first sensor wheel (13) and are connected to an evaluation unit (15) via signal lines (14) and by means of which the direction of rotation (10) of the drive train can be determined from codirectional edge changes (23, 24) of first assigned sensor signals (21, 22), **characterized in that**, to accelerate the determination of the direction of rotation, an additional second sensor unit (16) is provided on the output side of the reduction gear (5), which comprises a second sensor wheel (17) fastened to a rotatable component of the drive-side drive train and a second rotational speed sensor (S3) which is arranged fixedly with respect to the housing at an effective distance from the second sensor wheel (17) and which is connected to the evaluation unit (15) via a signal line (18) a direction of rotation (10), determined by the first sensor unit (12), of the drive train being checked for validity in the evaluation unit (15) by a plausibility check in the basis of a drive train rotation determined by the second sensor unit (16), so that, with the operative connection of the drive-side drive train to the output-side drive train being closed, in the case of a rotation of the drive train which is determined via the second sensor unit (16) the direction of rotation (10) of the drive train is determined after a single determined codirectional edge change (23, 24) of the two first rotational speed sensors (S1, S2) of the first sensor unit (12).

7. Device as claimed in Claim 6, **characterized in that**, in an automated transmission (2), a sensor unit, present on the drive-side drive train (1), of a transmission control is used as the second sensor unit (16).

8. Device as claimed in one of Claims 6 to 7, **characterized in that** the first sensor unit (12) is arranged on an output shaft W2 of the transmission (2).

9. Device as claimed in one of Claims 6 to 8, **characterized in that** the second sensor unit (16) is arranged on an input shaft W1 of the transmission (2).

## Revendications

1. Procédé de commande d'une chaîne de propulsion de véhicule, selon lequel le sens de rotation (10) de la chaîne de propulsion est déterminé par une interprétation de premiers signaux de capteur (20, 21) d'une première unité de détection (12) disposée du côté mené d'un engrenage réducteur (5), laquelle comprend une première roue de détection (13) fixée à un composant rotatif de la chaîne de propulsion côté mené et deux premiers capteurs tachymétriques (S1, S2), voisins par le pourtour et à un espace opérationnel de la roue de détection (13), montés en position fixe sur le boîtier et en liaison avec une unité d'interprétation (15) par le biais de lignes de signal (14), lesquels servent à déterminer le sens de rotation (10) de la chaîne de propulsion au moyen de changements de front (23, 24) dans le même sens des premiers signaux de capteur (20, 21), et selon lequel une fonction de sécurité et de confort est activée ou désactivée en fonction du sens de rotation (10) déterminé de la chaîne de propulsion, la distinction étant faite entre les états de rotation ou de déplacement Rotation à droite de la chaîne de propulsion correspondant à un déplacement en marche avant du véhicule automobile, Rotation à gauche de la chaîne de propulsion correspondant à un déplacement en marche arrière du véhicule automobile et Sens de rotation indéterminé de la chaîne de propulsion correspondant à une immobilisation du véhicule ou à un mouvement inconnu du véhicule,
**caractérisé en ce**
**que** la détermination du sens de rotation est accélérée en interprétant un deuxième signal de capteur (22) d'une deuxième unité de détection (16) supplémentaire, disposée du côté menant de l'engrenage réducteur (5), laquelle comprend une deuxième roue de détection (17) fixée à un composant rotatif de la chaîne de propulsion côté menant et un deuxième capteur tachymétrique (S3), situé à un espace opérationnel de la deuxième roue de détection (17), monté en position fixe sur le boîtier et en liaison avec l'unité d'interprétation (15) par le biais d'une ligne de signal (18),
la validité d'un sens de rotation (10) de la chaîne de propulsion, déterminé par la première unité de détection (12), étant déterminée dans l'unité d'interprétation par un contrôle de plausibilité au moyen d'une rotation de la chaîne de propulsion déterminée par la deuxième unité de détection (16), de sorte que lorsque la liaison opérationnelle entre la chaîne de propulsion côté menant et la chaîne de propulsion côté mené est fermée, le sens de rotation (10) de la chaîne de propulsion est déterminé lors d'une rotation de la chaîne de propulsion détectée par le biais de la deuxième unité de détection (16) après un unique changement de front (23, 24) dans le même sens détecté des deux premiers capteurs tachymétriques (S1, S2) de la première unité de détection (12).

2. Procédé selon la revendication 1, **caractérisé en ce que** lorsque la liaison opérationnelle entre la chaîne de propulsion côté menant et la chaîne de propulsion côté mené est interrompue, le sens de rotation (10) de la chaîne de propulsion est déterminé après au moins deux changements de front (23, 24) dans le même sens détectés des deux premiers capteurs tachymétriques (S1, S2) de la première unité de détection (12).

3. Procédé selon l'une des revendications 1 à 2, **caractérisé en ce que** si la vitesse de rotation n₂, n₁ détectée par les deux unités de détection (12, 16) devient inférieure à une vitesse de rotation minimale préalablement définie, le sens de rotation (10) de la chaîne de propulsion est considéré inconnu.

4. Procédé selon l'une des revendications 1 à 2, **caractérisé en ce que** lors d'une opération de démarrage avec un mouvement reconnu du véhicule dans la mauvaise direction, une fonction d'aide au démarrage en côte est activée.

5. Procédé selon la revendication 3, **caractérisé en ce que** lors d'une opération de démarrage avec la fonction d'aide au démarrage en côte activée, la fonction d'aide au démarrage en côte est désactivée si le mouvement du véhicule est non reconnu.

6. Dispositif de commande d'une chaîne de propulsion de véhicule, comprenant une première unité de détection (12) disposée du côté mené d'un engrenage réducteur (5) pour déterminer le sens de rotation (10) de la chaîne de propulsion, laquelle comprend une première roue de détection (13) fixée à un composant rotatif de la chaîne de propulsion côté mené et deux premiers capteurs tachymétriques (S1, S2), voisins par le pourtour et à un espace opérationnel de la première roue de détection (13), montés en position fixe sur le boîtier et en liaison avec une unité d'interprétation (15) par le biais de lignes de signal (14), lesquels servent à déterminer le sens de rotation (10) de la chaîne de propulsion au moyen de changements de front (23, 24) dans le même sens des premiers signaux de capteur (21, 22) associés,
**caractérisé en ce**
**qu'**une deuxième unité de détection (16) supplémentaire est prévue du côté menant de l'engrenage réducteur (5) pour accélérer la détermination du sens de rotation, laquelle comprend une deuxième roue de détection (17) fixée à un composant rotatif de la chaîne de propulsion côté menant et un deuxième capteur tachymétrique (S3), situé à un espace opérationnel de la deuxième roue de détection (17), monté en position fixe sur le boîtier et en liaison avec l'unité d'interprétation (15) par le biais d'une ligne de signal (18),
l'unité d'interprétation (15) étant configurée de telle sorte que la validité d'un sens de rotation (10) de la chaîne de propulsion, déterminé par la première unité de détection (12), est déterminée par un contrôle de plausibilité au moyen d'une rotation de la chaîne de propulsion déterminée par la deuxième unité de détection (16), de sorte que lorsque la liaison opérationnelle entre la chaîne de propulsion côté menant et la chaîne de propulsion côté mené est fermée, le sens de rotation (10) de la chaîne de propulsion est déterminé lors d'une rotation de la chaîne de propulsion détectée par le biais de la deuxième unité de détection (16) après un unique changement de front (23, 24) dans le même sens détecté des deux premiers capteurs tachymétriques (S1, S2) de la première unité de détection (12).

7. Dispositif selon la revendication 6, **caractérisé en ce que** dans le cas d'une boîte de vitesses automatique (2), une unité de détection d'une commande de boîte de vitesses présente sur la chaîne de propulsion (1) côté menant fait office de deuxième unité de détection (16).

8. Dispositif selon l'une des revendications 6 à 7, **caractérisé en ce que** la première unité de détection (12) est disposée sur un arbre de sortie W2 de la boîte de vitesses (2).

9. Dispositif selon l'une des revendications 6 à 8, **caractérisé en ce que** la deuxième unité de détection (16) est disposée sur un arbre d'entrée W1 de la boîte de vitesses (2).
